# EUROPÄISCHE PATENTANMELDUNG

(11) **EP 0 725 093 A2**
(43) Veröffentlichungstag der Anmeldung: **07.08.1996**
(21) Anmeldenummer: 96101086.5
(22) Anmeldetag: 26.01.1996
(51) Int. Cl.: C08F 267/00, C02F 5/10, C11D 3/37

(54) **Wasserlösliche oder wasserdispergierbare Pfropfpolymerisate, Verfahren zu ihrer Herstellung und ihre Verwendung**

(30) Priorität: 03.02.1995 DE 19503546
(71) Anmelder: BASF AKTIENGESELLSCHAFT, 67056 Ludwigshafen (DE)
(72) Erfinder: Denzinger, Walter, D-67346 Speyer (DE); Kistenmacher, Axel, Dr., D-67061 Ludwigshafen (DE); Perner, Johannes, Dr., D-67434 Neustadt (DE); Funhoff, Angelika, Dr., D-69198 Schriesheim (DE); Potthoff-Karl, Birgit, Dr., D-67061 Ludwigshafen (DE); Raubenheimer, Hans-Jürgen, D-68775 Ketsch (DE)

(57) **Zusammenfassung**

Wasserlösliche oder wasserdispergierbare Pfropfpolymerisate, die erhältlich sind durch radikalisch initiierte Pfropfpolymerisation von
(I) mindestens eines monoethylenisch ungesättigten Monomeren auf
(II) Polymerisaten einer Molmasse von 200 bis 5000 von monoethylenisch ungesättigten Dicarbonsäuren oder ihren Anhydriden
   wobei man auf 100 Gewichtsteile der Pfropfgrundlage 5 bis 2.000 Gewichtsteile der Monomeren (I) einsetzt, Verfahren zur Herstellung der Pfropfpolymerisate und Verwendung der Pfropfpolymerisate als Zusatz zu phosphatfreien oder phosphatreduzierten Textilwaschmitteln, als Dispergiermittel und Belagsverhinderer in Reinigern für harte Oberflächen und als Wasserbehandlungsmittel zur Verminderung der Kesselsteinabscheidung und der Wasserhärteausscheidung in wasserführenden Systemen.

## Beschreibung

Die Erfindung betrifft wasserlösliche oder wasserdispergierbare Pfropfpolymerisate, die durch radikalisch initiierte Pfropfpolymerisation von monoethylenisch ungesättigten Monomeren auf Polymerisaten von monoethylenisch ungesättigten Dicarbonsäuren oder ihren Anhydriden erhältlich sind, Verfahren zu ihrer Herstellung und die Verwendung der Polymerisate als Zusatz zu phosphatfreien oder phosphatreduzierten Textilwaschmitteln, als Dispergiermittel und Belagsverhinderer in Reinigern für harte Oberflächen und als Wasserbehandlungsmittel zur Verminderung der Kesselsteinabscheidung und der Wasserhärteausscheidung in wasserführenden Systemen.

Aus der GB-A-1 024 725 ist ein Verfahren zur Herstellung von Polymaleinsäureanhydrid bekannt, bei dem man Maleinsäureanhydrid in inerten Lösemitteln, z.B. Dialkylethern, Tetrahydrofuran, Dioxan, Benzol oder chlorierten Kohlenwasserstoffen, wie Chloroform, in Gegenwart von organischen Percarbonaten oder Diacylperoxiden polymerisiert. Besonders bevorzugte Lösemittel sind Benzol und Chloroform. Als Polymerisationsinitiatoren werden beispielsweise Diisopropylpercarbonat, Dibenzoylperoxid, Dicyclohexylpercarbonat in Mengen von 2 bis 40 Gew.%, bezogen auf Maleinsäureanhydrid, verwendet. Die so hergestellten Polymerisate enthalten erhebliche Mengen an nichtpolymerisiertem Maleinsäureanhydrid.

Nach dem Verfahren der GB-A-1 411 063 erhält man Polymaleinsäureanhydrid durch Polymerisieren von Maleinsäureanhydrid in Xylol als Lösemittel, das bis zu 99 % Ortho-Xylol enthält, wobei man als Polymerisationsinitiator Di-tert.-butylperoxid in einer Menge von 15 bis 40 Gew.-%, bezogen auf Maleinsäureanhydrid, einsetzt. Auch die nach diesem Verfahren hergestellten Polymerisate enthalten beträchtliche Mengen an nichtpolymerisiertem Maleinsäureanhydrid.

Aus der US-A-3 810 834 ist bekannt, daß man hydrolysierte Polymaleinsäureanhydride mit einem Molekulargewicht von 300 bis 5.000 vor der Hydrolyse oder wasserlöslichen Salzen von derartigen hydrolysierten Polymaleinsäureanhydriden bei der Wasserbehandlung einsetzt, wobei die Kesselsteinbildung vermindert und in vielen Fällen praktisch verhindert wird. Die dafür geeigneten Polymerisate werden durch Polymerisieren von Maleinsäureanhydrid in Toluol unter Verwendung von Benzoylperoxid und anschließende Hydrolyse des so erhaltenen Polymaleinsäureanhydrids hergestellt. Da die Polymerisation des Maleinsäueranhydrids nicht vollständig und die Abtrennung von nichtpolymerisiertem Maleinsäureanhydrid vom Polymerisat schwierig ist, enthalten die Polymaleinsäuren beträchtliche Mengen an Maleinsäure. Dieser Nachteil wird bei dem aus der US-A-4 818 795 bekannten Verfahren vermieden, bei dem man als Polymerisationsinitiatoren Peroxyester einsetzt.

Aus der EP-A-0 264 627 sind geringfügig vernetzte, wasserlösliche Polymaleinsäuren bekannt, die durch Polymerisieren von Maleinsäureanhydrid mit 0,1 bis 10 Gewichtsprozent, bezogen auf Maleinsäueranhydrid, eines mindestens 2 ethylenisch ungesättigte Doppelbindungen enthaltenden Vernetzers in einem aromatischen Kohlenwasserstoff bei Temperaturen von 60 bis 200°C in Gegenwart von 1 bis 20 Gewichtsprozent, bezogen auf Maleinsäureanhydrid, eines Peroxyesters und Hydrolysieren des Anhydridgruppen enthaltenden Polymerisats erhältlich sind. Die Polymerisation wird vorzugsweise in Benzol, Toluol, Xylol, Ethylbenzol, Diethylbenzol, Isopropylbenzol, Diisopropylbenzol oder Mischungen der genannten aromatischen Kohlenwasserstoffe durchgeführt. Die so erhältlichen wasserlöslichen Polymaleinsäuren werden als Wasserbehandlungsmittel zur Verminderung der Kesselsteinabscheidung und Wasserhärteausscheidung in wasserführenden Systemen verwendet.

Aus der EP-B-0 276 464 ist ein Verfahren zur Herstellung von wasserlöslichen Copolymerisaten der Maleinsäure bekannt, bei dem man Maleinsäureanhydrid und 1 bis 20 Gewichts-% eines mit Maleinsäureanhydrid copolymerisierbaren monoethylenisch ungesättigten Monomeren in einem aromatischen Kohlenwasserstoff bei Temperaturen von 60 bis 210°C in Gegenwart von 1 bis 20 Gew.-%, bezogen auf die Monomeren, an Peroxyestern copolymerisiert. Die so erhältlichen Copolymerisate werden in hydrolysierter Form als Wasserbehandlungsmittel in wasserführenden Systemen verwendet.

Aus der EP-B-0 009 171 ist ein Verfahren zur Herstellung von Polymaleinsäuren aus Maleinsäureanhydrid in Gegenwart von Acetanhydrid und Wasserstoffperoxid als Katalysator bekannt. Die daraus durch Hydrolyse erhältlichen Polymaleinsäuren werden als Gerüststoffe und Inkrustierungsinhibitoren in Waschmitteln verwendet.

Aus der EP-A-0 396 303 ist ein Verfahren zur Herstellung von Polymerisaten der Maleinsäure bekannt, bei dem man die Polymerisation der Maleinsäure ggf. in Gegenwart von copolymerisierbaren wasserlöslichen ethylenisch ungesättigten Monomeren unter Verwendung von 12 bis 150 g Wasserstoffperoxid und 0,3 bis 500 ppm, jeweils bezogen auf die eingesetzten Monomeren, eines mehrwertigen Metallions durchführt. Die so erhältlichen Polymerisate der Maleinsäure haben eine verbesserte biologische Abbaubarkeit. Sie werden als Builder in Waschmitteln oder als Scale-Inhibitor verwendet. Ein ähnliches Verfahren zur Herstellung von Maleinsäurepolymerisaten durch Polymerisieren von Maleinsäure in wässrigem Medium ist aus der EP-A-0 337 694 bekannt.

Aus der WO-A-94/12571 sind Mischungen aus Polymerisaten von monoethylenisch ungesättigten Dicarbonsäuren mit einer Molmasse von 200 bis 5.000 und Copolymerisaten von ethylenisch ungesättigten Carbonsäuren, Pfropfpolymerisaten von monoethylenisch ungesättigten Carbonsäuren auf Mono-, Oligo- oder Polysacchariden und/oder Polyaminocarbonsäuren bekannt. Diese Mischungen werden als Zusatz zu phosphatfreien oder phosphatreduzierten Textilwaschmitteln oder als Dispergiermittel und Belagsverhinderer in Reinigern für harte Oberflächen verwendet.

Der vorliegenden Erfindung liegt die Aufgabe zugrunde, neue Stoffe zur Verfügung zu stellen. Die neuen Stoffe sollen vor allem in Textilwaschmitteln eine verbesserte inkrustationsinhibierende Wirkung haben als die bisher dafür eingesetzten Additive.

Die Aufgabe wird erfindungsgemäß gelöst mit wasserlöslichen oder wasserdispergierbaren Pfropfpolymerisaten, die erhältlich sind durch radikalisch initiierte Pfropfpolymerisation von
(I) mindestens eines monoethylenisch ungesättigten Monomeren auf
(II) Polymerisaten einer Molmasse von 200 bis 5.000 von monoethylenisch ungesättigten Dicarbonsäuren oder ihren Anhydriden,
   wobei man auf 100 Gewichtsteile der Pfropfgrundlage (II) 5 bis 2.000 Gewichtsteile (I) einsetzt.

Gegenstand der Erfindung ist außerdem ein Verfahren zur Herstellung der vorstehend genannten wasserlöslichen oder wasserdispergierbaren Pfropfpolymerisate, bei dem man
(I) mindestens ein monoethylenisch ungesättigtes Monomer in Gegenwart von
(II) Polymerisaten einer Molmasse von 200 bis 5.000 von monoethylenisch ungesättigten Dicarbonsäuren oder ihren Anhydriden
   radikalisch polymerisiert, wobei man auf 100 Gew.-Teile der Pfropfgrundlage (II) 5 bis 2.000 Gew.-Teile (I) einsetzt.

Gegenstand der Erfindung ist außerdem die Verwendung der oben beschriebenen wasserlöslichen oder wasserdispergierbaren Pfropfpolymarisate als Zusatz zu phosphatfreien oder phosphatreduzierten Textilwaschmitteln, als Dispergiermittel und Belagesverhinderer in Reinigern für harte Oberflächen und als Wasserbehandlungsmittel zur Verhinderung der Kesselsteinabscheidung und der Wasserhärterausscheidung in wasserführenden Systemen.

Die erfindungsgemäßen Pfropfpolymerisate enthalten als Pfropfgrundlage (II) Polymerisate von monoethylenisch ungesättigten Dicarbonsäuren mit einer Molmasse von 200 bis 5.000. Hierbei kann es sich um Homo- oder Copolymerisate handeln. Die Polymerisate können in Form der freien Säuren oder in partiell bzw. vollständig neutralisierter Form vorliegen. Zum Neutralisieren verwendet man Alkalimetall-, Ammonium- oder Erdalkalimetallbasen, z.B. Natronlauge, Kalilauge, Soda, Potasche, Natriumhydrogencarbonat, Kaliumhydrogencarbonat, Ammoniak, Amine wie Dimethylamin, Trimethylamin, Diethylamin, Triethylamin, n-Butylamin, Dibutylamin, Hexylamin, Ethanolamin, Diethanolamin, Triethanolamin und Morpholin, Magnesiumoxid, Magnesiumhydroxyd, Calciumoxid, Calciumhydroxid, Calciumcarbonat und Bariumhydroxyd. Zum Neutralisieren der Polymerisate verwendet man vorzugsweise Natronlauge, Kalilauge oder Ammoniak.

Als Pfropfgrundlage kommen Polymerisate von monoethylenisch ungesättigten Dicarbonsäuren, ihren Salzen oder ihren Anhydriden in Betracht. Geeignet sind beispielsweise Polymerisate der Maleinsäure, Fumarsäure, Itaconsäure, Mesaconsäure, Citraconsäure und Methylenmalonsäure sowie - soweit bekannt - die Polymerisate der entsprechenden Anhydride. Die hier beschriebenen Monomeren werden im folgenden Text als Monomere der Gruppe (a) bezeichnet.

Vorzugsweise verwendet man als Komponente (II) Polymaleinsäure einer Molmasse von 200 bis 5.000 oder deren Alkalimetall- oder Ammoniumsalze. Von den Polymaleinsäuren sind solche mit einer Molmasse von 300 bis 2.000 als Pfropfgrundlage von besonderem Interesse. Besonders bevorzugt als Pfropfgrundlage (II) sind Maleinsäureanhydrideinheiten enthaltende Polymerisate mit einer Molmasse von 200 bis 5.000, insbesondere 400 bis 4.000.

Die Homopolymerisate der Maleinsäure sind im Handel erhältlich. Sie werden entweder durch Polymerisieren von Maleinsäure in wäßrigem Medium nach bekannten Verfahren in Form der freien Säure oder in teil- oder vollneutralisierter Form mit radikalischen, bevorzugt wasserlöslichen Initiatoren oder durch Polymerisieren von Maleinsäureanhydrid in einem aromatischen Kohlenwasserstoff bei Temperaturen von 60 bis 200°C in Gegenwart von Polymerisationsinitiatoren und Hydrolysieren der Polymerisate hergestellt. Als Polymerisationsinitiatoren werden beispielsweise Ditertiärbutylperoxid, organische Percarbonate, Diacylperoxide oder vorzugsweise Peroxyester verwendet. Geeignete aromatische Kohlenwasserstoffe sind beispielsweise Toluol, Xylol, Ethylbenzol, Diethylbenzol, Isopropylbenzol, Diisopropylbenzol oder Mischungen der genannten Kohlenwasserstoffe. Als Peroxyester kommen insbesondere solche Verbindungen in Betracht, die sich von gesättigten C₄- bis C₁₀-Carbonsäuren ableiten, z.B. Tertiär-butyl-per-2-ethylhexanoat, tertiär-Butylperpivalat, tertiär-Butylperbenzoat und tertiär-Butyl-permaleinat. Verfahren zur Herstellung von Oligomaleinsäuren der oben beschriebenen Art sind beispielsweise aus der zum Stand der Technik genannten US-A-4 818 795 bekannt.

Als Pfropfgrundlage (II) kommen im wesentlichen Polymerisate aus
(a) 60 bis 100 Gew.-% monoethylenisch ungesättigten C₄- bis C₈-Dicarbonsäuren in Form der freien Säuren oder in mit Alkalimetall-, Ammonium- oder Erdalkalimetallbasen teilweise oder vollständig neutralisierter Form oder Anhydriden von C₄- bis C₈-Dicarbonsäuren,
(b) 0 bis 40 Gew.-% anderen monoethylenisch ungesättigten Monomeren und/oder
(c) 0 bis 2 Gew.-% copolymerisierbaren Monomeren, die mindestens zwei nicht konjugierte, ethylenisch ungesättigte Doppelbindungen im Molekül enthalten,
in Betracht. Die Polymerisate der monoethylenisch ungesättigten Dicarbonsäuren können beispielsweise dadurch modifiziert werden, daß man sie oder ihre Alkalimetall-, Ammonium- oder Erdalkalimetallsalze oder die jeweiligen Anhydride in Gegenwart von Monomeren der Gruppe (b) copolymerisiert. Als Monomere der Gruppe (b) kommen sämtliche von den Monomeren der Gruppe (a) verschiedenen Monomere in Betracht.

Geeignete Monomere der Gruppe (b) sind z.B. im einzelnen folgende Verbindungen: Hydroxyethylacrylat, Hydroxypropylacrylat, Hydroxybutylacrylat, Hydroxyethylmethacrylat, Hydroxypropylmethacrylat, Hydroxybutylmethacrylat, Maleinsäure-Monoethylenglykolester, der Di-Ester aus Maleinsäure und Ethylenglykol, Halbester der Maleinsäure von Propylenglykol, Halbester der Fumarsäure, die sich von Ethylenglykol oder Propylenglykol ableiten, Di-Ester von Maleinsäure, die sich von Propylenglykol ableiten, Di-Ester der Fumarsäure von Ethylenglykol, Monoester aus Acrylsäure und Polyethylenglykolen eines Molekulargewichts von 200 bis 6.000, Methacrylsäureester von Polyethylenglykolen eines Molekulargewichts von 300 bis 1.000, Vinylformiat, Vinylacetat, Vinylpropionat, Vinylbutyrat, Acrylsäure, Methacrylsäure, Acrylamidomethylpropansulfonsäuren, Vinylphosphonsäure, Vinylsulfonsäure, Acrylsäureester von einwertigen C₁- bis C₁₈-Alkoholen, wie Methylacrylat, Ethylacrylat, n-Propylacrylat, Isopropylacrylat, n-Butylacrylat, Isobutylacrylat, tert.-Butylacrylat, 2-Ethylhexyl-acrylat und Stearylacrylat, sowie die Mono- und Diester der Maleinsäure mit einwertigen C₁-bis C₁₈-Alkoholen, wie Maleinsäuremonomethylester, Maleinsäuredimethylester, Maleinsäuremonoethylester, Maleinsäurediethylester, Maleinsäuremonopropylester, Maleinsäuredipropylester, Maleinsäuremono-tert.-butylester, Maleinsäuredi-tert.-butylester, Fumarsäure-monomethylester, Fumarsäure-di-methylester, Fumarsäure-mono-tert.-butylester, Fumarsäure-di-tert.-butylester, Itakonsäuremonomethylester, Dimethylaminoethylacrylat, Dimethylaminoethylmethacrylat, Diethylaminoethylacrylat, Diethylaminoethylmethacrylat, Dipropylaminoethylacrylat, Dipropylaminoethylmethacrylat, Dipropylaminoneopentylacrylat und Dimethylaminoneopentylmethacrylat, sowie Styrol, α-Methylstyrol, 1-Olefine mit 2 bis 30 C-Atomen wie z.B. Ethen, Propen, Isobuten, Diisobuten, Oktadecen und Alkylvinylether mit 1 bis 30 C-Atomen im Alkylrest wie z.B. Methylvinylether, Ethylvinylether und Isobutylvinylether.

Von den Monomeren der Gruppe (b) verwendet man vorzugsweise Hydroxyethylacrylat, Hydroxypropylacrylat, Hydroxybutylacrylat, Hydroxyethylmethacrylat, Hydroxypropylmethacrylat, Hydroxybutylmethylacrylat, Vinylacetat, Vinylpropionat, Fumarsäuredimethylester, Maleinsäure-di-tert.-butylester, Acrylamido-2-methylpropansulfonsäure, Acrylsäure, Methacrylsäure, Vinylphosphonsäure, Methylvinylether, Styrol, Diisobutylen und Isobuten. Falls man die Monomeren der Gruppe (b) einsetzt, so werden sie vorzugsweise in einer Menge von 1 bis 30 Gew.-%, bezogen auf die Monomerenmischung verwendet.

Die Polymerisate der monoethylenisch ungesättigten Dicarbonsäuren oder ihrer Anhydride können auch kettenverlängert sein. Solche Polymerisate sind aus der oben angegebenen EP-A-0 264 627 bekannt. Sie werden beispielsweise dadurch hergestellt, daß man monoethylenisch ungesättigte Dicarbonsäuren oder ihre Anhydride mit bis zu 2 Gewichts-% einer mindestens 2 ethylenisch ungesättigte nicht konjugierte Doppelbindungen aufweisenden Verbindung in aromatischen Kohlenwasserstoffen bei Temperaturen von 60 bis 200°C in Gegenwart von 1 bis 20 Gewichts-%, bezogen auf die eingesetzten Monomeren, eines Initiators polymerisiert. Vorzugsweise werden als Initiator Peroxyester eingesetzt. Auch diese Polymerisate haben Molekulargewichte bis zu 5.000.

Monomere, die mindestens 2 ethylenisch ungesättigte, nicht konjugierte Doppelbindungen enthalten, werden üblicherweise als Kettenverlängerer bei der Polymerisation verwendet. Sie sind oben als Komponente (c), die gegebenenfalls bei der Herstellung der Polymerisate der Maleinsäure mitverwendet wird, angegeben.

Geeignete Kettenverlängerer dieser Art sind beispielsweise Diacrylate oder Dimethacrylate von mindestens zweiwertigen gesättigten Alkoholen, z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Neopentylglykoldiacrylat, Neopentylglykoldimethacrylat, 3-Methylpentandioldimethacrylat. Auch die Acrylsäure- und Methacrylsäureester von Alkoholen mit mehr als 2 OH-Gruppen können als Kettenverlängerer eingesetzt werden, z.B. Trimethylolpropantriacrylat oder Trimethylolpropantrimethacrylat. Eine weitere Klasse von Kettenverlängerern sind Diacrylate oder Dimethacrylate von Polyethylenglykolen oder Polypropylenglykolen mit Molekulargewichten von jeweils 200 bis 6.000. Polyethylenglykole bzw. Polypropylenglykole, die für die Herstellung der Diacrylate oder Dimethacrylate verwendet werden, haben vorzugsweise ein Molekulargewicht von jeweils 400 bis 1.000. Außer den Homopolymerisaten des Ethylenoxids bzw. Propylenoxids können auch Blockcopolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Kettenverlängerer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat. Als Kettenverlängerer eignen sich außerdem Vinylester von ethylenisch ungesättigten C₃-bis C₆-Carbonsäuren, z.B. Vinylacrylat, Vinylmethacrylat oder Vinylitakonat. Als Kettenverlängerer geeignet sind außerdem Vinylester von mindestens 2 Carboxylgruppen enthaltenden gesättigten Carbonsäuren sowie Di- und Polyvinylether von mindestens zweiwertigen Alkoholen, z.B. Adipinsäuredivinylester, Butandiol-divinylether und Trimethylolpropantrivinylether. Weitere Kettenverlängerer sind Allylester ethylenisch ungesättigter Carbonsäuren, z.B. Allylacrylat und Allylmethacrylat, Allylether von mehrwertigen Alkoholen, z.B. Penta-erythrittriallylether, Triallylsaccharose und Pentaallylsaccharose. Außerdem eignen sich als Kettenverlängerer Methylenbisacrylamid, Methylenbismethacrylamid, Divinylethylenharnstoff, Divinylpropylenharnstoff, Divinylbenzol, Divinyldioxan, Tetraallylsilan und Tetravinylsilan.

Die Copolymerisation der Monomeren (a) und (b) kann gegebenenfalls zusätzlich noch in Gegenwart von Monomeren (c) durchgeführt werden, wovon bis 2 Gew.-%, bezogen auf die Monomerenmischung aus (a), (b) und (c), eingesetzt werden und bei denen es sich um mindestens 2 ethylenisch ungesättigte, nicht konjugierte Doppelbindungen enthaltenen Verbindungen handelt, die bereits oben genannt sind. Die Molmasse der Copolymerisate der monoethylenisch ungesättigten Dicarbonsäuren oder ihrer Anhydride beträgt ebenfalls 200 bis 5.000 und liegt vorzugsweise in dem Bereich von 300 bis 2.000.

Vorzugsweise verwendet man als Pfropfgrundlage (II) Polymaleinsäuren einer Molmasse von 300 bis 2.000, deren Alkalimetall- oder Ammoniumsalze, sowie Copolymerisate aus Maleinsäure und Hydroxyethylacrylat, Hydroxypropylacrylat, Hydroxybutylacrylat, Vinylacetat, Isobuten, Diisobuten, Styrol, Methacrylsäure und/oder Acrylsäure. Diese Verbindungen werden entweder in Form der freien Säuren oder in zumindest teilweise mit Natronlauge oder Ammoniak neutralisierter Form eingesetzt. Besonders bevorzugt wird Polymaleinsäureanhydrid mit einer Molmasse von 400 bis 4.000 als Pfropfgrundlage eingesetzt.

Auf 100 Gew.-Teile der Pfropfgrundlage (II) werden 5 bis 2.000 Gew.-Teile mindestens einer Sorte von monoethylenisch ungesättigten Monomeren aufgepfropft. Als monoethylenisch ungesättigte Monomere (I) kommen sämtliche monoethylenisch ungesättigten Monomeren in Betracht, die zu wasserlöslichen bzw. wasserdispergierbaren Pfropfpolymeren führen. Hierbei kann es sich beispielsweise um wasserlösliche monoethylenisch ungesättigte Monomere oder auch um wasserunlösliche monoethylenisch ungesättigte Monomere handeln. Die wasserunlöslichen Monomeren werden dabei nur in einem solchen Maße bei der Pfropfpolymerisation eingesetzt, daß die entstehenden Pfropfpolymerisate noch in Wasser löslich bzw. wasserdispergierbar sind. Als monoethylenisch ungesättigte Monomere eignen sich beispielsweise monoethylenisch ungesättigte Carbonsäuren mit 3 bis 10 C-Atomen sowie die Ester der Carbonsäuren mit einwertigen C₁- bis C₁₈-Alkoholen. Beispiele für diese Verbindungen sind Acrylsäure, Methacrylsäure, Crotonsäure, Vinylmilchsäure, Ethacrylsäure, Maleinsäure, Itaconsäure, Methylacrylat, Methylmethacrylat, Ethylacrylat, Ethylmethacrylat, n-Propylacrylat, n-Propylmethacrylat, n-Butylacrylat, n-Butylmethacrylat, 2-Ethylhexylacrylat, 2-Ethylhexylmethacrylat, Stearylacrylat, Stearylmethacrylat, sek.-Butylacrylat, sek.-Butylmethacrylat, tert.-Butylacrylat, Neopentylacrylat, n-Hexylacrylat, Laurylacrylat und Laurylmethacrylat. Außerdem eignen sich Hydroxyalkyl(meth)acrylate wie Hydroxyethylacrylat, Hydroxyethylmethacrylat, Hydroxy-n-propylacrylat, Hydroxypropylmethacrylat, Hydroxyisopropylacrylat, Hydroxyisopropylmethacrylat, wobei die technischen Gemische von besonderem Interesse sind, die bei der Umsetzung von Ethylenoxid oder Propylenoxid mit Acrylsäure und/oder Methacrylsäure erhalten werden, Butandiolmonoacrylat und Butandiolmonomethacrylat. Außerdem eignen sich als Monomere (I) Vinylester von C₁- bis C₁₈-Carbonsäuren, beispielsweise Vinylformiat, Vinylacetat, Vinylpropionat und Vinylpivalat. Weitere Beispiele für Monomere (I) sind Isobuten, Diisobuten, Styrol, α-Methylstyrol, Acrylamid, Methacrylamid, Acrylnitril, Methacrylnitril, N-Vinylformamid, N-Vinylacetamid, N-Methyl-N-vinylformamid und kationische Monomere wie Dialkylamino-C₂- bis -C₄-alkyl(meth)acrylate, z.B. Dimethylaminoethylacrylat, Dimethylaminoethylmethacrylat, Dimethylaminopropylacrylat, Dimethylaminopropylmethacrylat, Dimethylaminobutylacrylat, Dimethylaminobutylmethacrylat, Diethylaminoethylacrylat, Diethylaminoethylmethacrylat, Diethylaminopropylacrylat, Diethylaminopropylmethacrylat, 1-Vinylimidazol, 1-Vinyl-2-methylimidazol, N-Vinylimidazolin, N-Vinyl-2-methylimidazolin, Allylamin und Dialkylaminoalkyl(meth)acrylamide, wie Dimethylaminoethylacrylamid und Dimethylaminoethylmethacrylamid. Weitere geeignete Monomere sind N-Vinylpyrrolidon, N-Vinylcaprolactam, Acrylamidopropansulfonsäure, Methallylsulfonat, Sulfopropylacrylat, Sulfoethylacrylat und Sulfoethylmethacrylat.

Die sauren Monomeren können entweder in Form der freien Säuregruppen oder in partiell oder vollständig mit Alkalimetall-, Ammonium- oder Erdalkalimetallbasen neutralisierter Form polymerisiert werden. Die basischen Monomeren können in Form der freien Basen, als Salz mit anorganischen oder organischen Säuren oder in quaternisierter Form allein oder in Mischung mit anderen Monomeren auf die Pfropfgrundlage aufgepfropft werden. Als Monomere (I) kommen vorzugsweise monoethylenisch ungesättigte C₃- bis C₁₀-Carbonsäuren, Ester dieser Carbonsäuren mit C₁- bis C₁₈-Alkoholen, Hydroxyalkylacrylate, Hydroxyalkylmethacrylate, Vinylestern von C₁- bis C₁₈-Carbonsäuren, Styrol, Isobuten, Diisobuten, Methylstyrol und deren Gemische in Betracht. So kann man beispielsweise Acrylsäure oder Mischungen aus Acrylsäure oder Methacrylsäure in jedem beliebigen Verhältnis zusammen mit Ethylhexylacrylat oder Hydroxypropylacrylat auf Polymaleinsäure oder Polymaleinsäureanhydrid pfropfen. Beispielsweise kann man Mischungen aus 10 bis 90 Gew.-% Acrylsäure und 90 bis 10 Gew.-% Hydroxypropylacrylat auf die Pfropfgrundlage (II) aufpfropfen. Produkte, die sehr gute inkrustationsinhibierende Wirkung haben und gleichzeitig gute Skaleinhibitoren sind, werden durch Pfropfen von Polymaleinsäure oder Polymaleinsäureanhydrid mit einem Monomerengemisch aus Acrylsäure und Maleinsäure hergestellt. Solche Gemische enthalten beispielsweise 10 bis 70 Gew.-% Maleinsäure und 90 bis 30 Gew.-% Acrylsäure.

Andere wirksame Additive für Textilwaschmittel sind dadurch erhältlich, daß man Acrylsäure und/oder Methacrylsäure in Mischung mit mindestens einem Monomer aus der Gruppe Vinylacetat, Vinylpropionat, Hydroxyethylacrylat, Hydroxypropylacrylat, Methylacrylat, Methylmethacrylat, Ethylacrylat, Ethylmethacrylat, Propylacrylat oder Isopropylacrylat auf Polymaleinsäureanhydrid oder Polymaleinsäure pfropft. Andere Produkte, die sowohl für den Einsatz in Waschmitteln als auch als Scaleinhibitor und als Dispergiermittel von Interesse sind, werden durch Pfropfen von Polymaleinsäureanhydrid oder Polymaleinsäure mit
(a) Acrylsäure und/oder Methacrylsäure, und
(b) Vinylformiat, Vinylacetat, Vinylpropionat, Hydroxyethylacrylat, Hydroxypropylacrylaten, Hydroxypropylmethacrylaten, Hydroxyethylmethacrylat und Acrylester von C₁- bis C₁₈-Alkoholen und/oder
(c) Acrylamidomethylpropansulfonsäure, Methallylsulfonat, Sulfopropylacrylat, Sulfoethylacrylat, Sulfoethylmethacrylat und/oder Vinylsulfonat hergestellt.

Auf die Pfropfgrundlage (II), insbesondere auf Polymaleinsäureanhydrid oder Polymaleinsäure können auch solche Monomer-Mischungen aufgepfropft werden, daß amphotere Pfropfpolymerisate entstehen, z.B. kann man folgende Gruppen von Monomeren gemeinsam auf die Pfropfgrundlage (II) pfropfen:
(1) Acrylsäure und/oder Methacrylsäure, und
(2) kationische Monomere, beispielsweise Dimethylaminoethylacrylat in Form von Salzen mit Salzsäure oder Schwefelsäure oder in Form des Methochlorids, Diethylaminoethylacrylat, Dimethylaminoethylmethacrylat, Vinylimidazol, 1-Vinyl-2-methyl-imidazol, N-Vinylimidazolin, N-Vinyl-2-methylimidazolin und Monomere, die bei der Hydrolyse eine Amino- bzw. Ammoniumgruppe bilden, z.B. N-Vinylformamid, N-Vinyl-N-methylacetamid oder N-Vinylacetamid und/oder
(3) Vinylformiat, Vinylacetat, Vinylpropionat, Acrylnitril, Methacrylnitril, Acrylamid, Methacrylamid und Ester der Acrylsäure, Methacrylsäure und Maleinsäure mit C₁- bis C₁₈-Alkoholen.

Pfropfpolymere, die einen Vinylester oder andere Ester einpolymerisiert enthalten, können in einer polymeranalogen Reaktion hydrolysiert werden. So entstehen beispielsweise aus einpolymerisierten Einheiten von Vinylformiat, Vinylacetat oder Vinylpropionat bei der Hydrolyse Vinylalkoholeinheiten. Aus Einheiten von einpolymerisiertem N-Vinylformamid entstehen durch Abspaltung der Formylgruppe Vinylamin- bzw. Vinylammonium-Einheiten. Die Hydrolyse von N-Vinylformamid kann beispielsweise mit Säuren oder Basen erfolgen. Sofern die Copolymerisate außer Vinylformamid einen Vinylester, Acrylester, Acrylnitril oder Acrylamid einpolymerisiert enthalten, so erfolgt bei der Hydrolyse der Copolymerisate in den meisten Fällen neben einer Abspaltung von Formylgruppen aus dem einpolymerisierten Vinylformiat auch eine Hydrolyse der anderen in das Copolymerisat einpolymerisierten Einheiten.

Die Herstellung der Pfropfpolymeren erfolgt durch radikalisch Polymerisation. Die Pfropfpolymerisation kann in Masse, Lösung, Suspension oder Emulsion durchgeführt werden. Als Lösemittel kommen beispielsweise Wasser, Alkohole, Ketone, Ester, aliphatische und aromatische Kohlenwasserstoffe und Chlorkohlenwasserstoffe sowie Dialkylether in Betracht. Die Dialkylether können sich auch von Polyalkylenglykolen ableiten. Wird die Pfropfung in Emulsion vorgenommen, ist die Mitverwendung von Emulgatoren erforderlich. Geeignet sind beispielsweise nichtionische und ionische Tenside. Sie werden der Pfropfkomponente in Mengen von 0,1 bis 5 Gew.-% zugesetzt.

Vorzugsweise setzt man als Pfropfgrundlage (II) Maleinsäureanhydrid-Einheiten enthaltende Polymerisate einer Molmasse von 200 bis 5.000, insbesondere 300 bis 3.000 ein. Solche Polymerisate werden üblicherweise durch Fällungspolymerisation in aromatischen Kohlenwasserstoffen wie Toluol, Xylol, Ethylbenzol oder Isopropylbenzol hergestellt. Vorteilhafterweise erfolgt die Pfropfpolymerisation direkt im Anschluß an die Herstellung der Polymaleinsäuren in der gleichen Vorrichtung. In anderen Fällen ist es vorteilhaft, die Polymerisation in wäßriger Lösung durchzuführen, und zwar dann, wenn man die Pfropfgrundlage durch Polymerisieren von Maleinsäure beispielsweise gemäß der Lehre der EP-A-0 396 303 hergestellt hat. Für den Einsatz als Wasserbehandlungsmittel (Scaleinhibitor) sind insbesondere solche Pfropfpolymerisate von Interesse, die durch Pfropfen von Monomergemischen aus Isobuten, Diisobuten und Styrol mit Maleinsäureanhydrid auf Polymaleinsäureanhydrid erhältlich sind, z.B. Pfropfpolymerisate, die auf eine Pfropfgrundlage aus Polymaleinsäureanhydrid Polymerketten aus alternierend aufgebauten Copolymerisaten von Isobuten und Maleinsäureanhydrid oder Diisobutylen und Maleinsäureanhydrid oder Styrol und Maleinsäureanhydrid enthalten. Die Polymerketten können die genannten Monomeren jedoch auch in statistischer Verteilung enthalten, so daß die aufgepfropften Polymerketten beispielsweise 10 bis 50 Mol.-%Diisobuten, Isobuten oder Styrol und 50 bis 90 Mol-% Maleinsäureanhydrid aufgepfropft enthalten. Für die Anwendung werden die Polymerisate üblicherweise in ein wäßrige Lösung überführt. Dies kann beispielsweise dadurch geschehen, daß man den als Lösemittel verwendeten aromatischen Kohlenwasserstoff wie Toluol oder Xylol durch Einblasen von Wasserdampf abdestilliert und die Pfropfpolymerisate durch Zugabe von Alkalimetall- oder Ammoniumbasen, insbesondere von Natronlauge, Kalilauge oder Ammoniak oder Ethanolamin teilweise oder vollständig neutralisiert. Man erhält so direkt gebrauchsfertige Polymerlösungen.

Auf 100 Gew.-Teile der Pfropfgrundlage setzt man vorzugsweise 7,5 bis 500 und insbesondere 10 bis 200 Gew.-Teile mindestens einer Gruppe von monoethylenisch ungesättigten Monomeren ein.

Die beschriebenen wasserlöslichen oder wasserdispergierbaren Pfropfpolymerisate werden im allgemeinen unter Mitverwendung von radikalbildenden Initiatoren hergestellt. Als radikalbildende Initiatoren sind vorzugsweise alle diejenigen Verbindungen geeignet, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindesten zwei bei verschiedenen Temperaturen zerfallenden Initiatoren zu arbeiten, nämlich zunächst einen bereits bei niedrigerer Temperatur zerfallenden Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche Initiatoren oder Mischungen von wasserlöslichen und wasserunlöslichen Initiatoren einsetzen. Die in Wasser unlöslichen Initiatoren sind dann normalerweise in der organischen Phase löslich.

Für die im folgenden angegebenen Temperaturbereiche kann man in vorteilhafter Weise die dort aufgeführten Initiatoren verwenden:
Temperatur: 40 bis 60°C:
Acetylcyclohexansulfonylperoxid, Diacetylperoxydicarbonat, Dicyclohexylperoxydicarbonat, Di-2-ethylhexylperoxydicarbonat, tert.-Butylperneodecanoat, 2,2'-Azobis-(4-methoxy-2,4-dimethylvaleronitril), 2,2'-Azobis-(2-methyl-N-phenylpropionamidin)dihydrochlorid, 2,2'-Azobis-(2-methylpropionamidin)dihydrochlorid;
Temperatur: 60 bis 80°C:
tert.-Butylperpivalat, Dioctanoylperoxid, Dilauroylperoxid, 2,2'-Azobis-(2,4-dimethylvaleronitril);
Temperatur: 80 bis 100°C:
Dibenzoylperoxid, tert.-Butylper-2-ethylhexanoat, tert.-Butylpermaleinat, 2,2'-Azobis-(isobutyronitril), Dimethyl-2,2'-azobisisobutyrat, Natriumpersulfat, Kaliumpersulfat, Ammoniumpersulfat;
Temperatur: 100 bis 120°C
Bis-(tert.-butylperoxy)-cyclohexan, tert.-Butylperoxyisopropylcarbonat, tert.-Butylperacetat, Wasserstoffperoxid;
Temperatur: 120 bis 140°C:
2,2-Bis-(tert.-butylperoxy)-butan, Dicumylperoxid, Di-tert.-amylperoxid, Di-tert.-butylperoxid;
Temperatur: >140°C:
p-Menthanhydroperoxid, Pinanhydroperoxid, Cumolhydroperoxid und tert.-Butylhydroperoxid.

Verwendet man zusätzlich zu den genannten Initiatoren noch Salze oder Komplexe von Schwermetallen, z.B. Kupfer-, Kobalt-, Mangan-, Eisen-, Vanadium-, Cer-, Nickel- oder Chromsalze oder organische Verbindungen, wie Benzoin, Dimethylanilin oder Ascorbinsäure, so können die Halbwertszeiten der angegebenen radikalbildenden Initiatoren verringert werden. So kann man beispielsweise tert.-Butylhydroperoxid unter Zusatz von 5 ppm Kupfer(II)-acetylacetonat so aktivieren, daß bereits bei 100°C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden.

Bezogen auf die bei der Polymerisation eingesetzten Monomeren (I) verwendet man 0,01 bis 30, vorzugsweise 0,05 bis 15 Gew.-% eines Polymerisationsinitiators oder einer Mischung mehrerer Polymerisationsinitiatoren. Als Redoxkomponenten setzt man 0,01 bis 30 Gew.-% der reduzierend wirkenden Verbindungen zu. Schwermetalle-werden im Bereich von 0,1 bis 100 ppm, vorzugsweise 0,5 bis 10 ppm eingesetzt. Oft ist es von Vorteil, eine Kombination aus Peroxid, Reduktionsmittel und Schwermetall als Redoxkatalysator einzusetzen.

Die Polymerisation der Monomeren (I) kann auch durch Einwirkung von ultravioletter Strahlung, gegebenenfalls in Gegenwart von UV-Initiatoren, durchgeführt werden. Für das Polymerisieren unter Einwirkung von UV-Strahlen setzt man die dafür üblicherweise in Betracht kommenden Photoinitiatoren bzw. Sensibilisatoren ein. Hierbei handelt es sich beispielsweise um Verbindungen wie Benzoin oder Benzoinether, α -Methylbenzoin oder α -Phenylbenzoin. Auch sogenannte Triplett-Sensibilisatoren, z.B. Benzildiketale, können verwendet werden. Als UV-Strahlungsquellen dienen beispielsweise neben energiereichen UV-Lampen wie Kohlenbogenlampen, Quecksilberdampflampen oder Xenonlampen auch UV-arme Lichtquellen wie Leuchtstoffröhren mit hohem Blauanteil.

Um Polymerisate mit niedrigem K-Wert herzustellen, wird die Pfropfpolymerisation zweckmäßigerweise in Gegenwart von Reglern durchgeführt. Geeignete Regler sind beispielsweise Schwefel in gebundener Form enthaltende organische Verbindungen wie Mercaptoverbindungen, z.B. Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, z.B. Allylalkohol, Aldehyde wie Formaldehyd, Acetaldehyd, Propionaldehyd, n-Butyraldehyd und Isobutyraldehyd, Ameisensäure, Ammoniumformiat, Propionsäure, Hydrazinsulfat und Butenole. Falls die Polymerisation in Gegenwart von Reglern durchgeführt wird, benötigt man davon 0,05 bis 20 Gew.-%, bezogen auf die bei der Pfropfpolymerisation eingesetzten Monomeren (I).

Die Polymerisation erfolgt üblicherweise in einer Inertgasatmosphäre unter Ausschluß von Luftsauerstoff. Während der Polymerisation wird im allgemeinen für eine gute Durchmischung der Reaktionsteilnehmer gesorgt. Bei kleineren Ansätzen, bei denen eine sichere Abführung der Polymerisationswärme gewährleistet ist, kann man die Reaktionsteilnehmer, die vorzugsweise in einem inerten Verdünnungsmittel vorliegen, diskontinuierlich polymerisieren, indem man das Reaktionsgemisch auf die Polymerisationstemperatur erhitzt. Diese Temperatur liegt üblicherweise im Bereich von 20 bis 180°C. Bei dieser Methode erhält man jedoch manchmal Pfropfpolymerisate, die in sich etwas uneinheitlich sind und daher ihre optimale Wirksamkeit nicht erreichen.

Um den Verlauf der Polymerisationsreaktion besser kontrollieren zu können, gibt man daher die Monomeren (I) kontinuierlich oder absatzweise in dem Maße zur Pfropfgrundlage zu, daß die Pfropfpolymerisation in dem gewünschten Temperaturbereich gut kontrollierbar ist. Bevorzugt ist eine Art der Zugabe, bei der man im Polymerisationsreaktor zunächst die Komponente (II) oder zumindest einen Teil der Komponente (II) vorlegt und darin unter Rühren auf die gewünschte Polymerisationstemperatur erhitzt. Sobald diese Temperatur erreicht ist, fügt man dazu über einen Zeitraum von etwa 0,5 bis 10, vorzugsweise 1 bis 8 Stunden, die Monomeren (I) sowie den Initiator und gegebenenfalls einen Regler zu. Eine derartige Vorgehensweise wird beispielsweise beim Polymerisieren der Komponenten in einem inerten Verdünnungsmittel, in dem die Pfropfgrundlage suspendiert ist, sowie auch bei der in Lösung durchgeführten Pfropfpolymerisation in vorteilhafter Weise angewendet.

Die Pfropfpolymerisate können auch nach den Verfahren der Suspensions- oder Lösungspolymerisation der Komponenten (I) und (II) in wäßrigem Medium hergestellt werden, wobei die Lösungspolymerisation in Wasser besonders bevorzugt ist. Bei der Lösungspolymerisation in wäßrigem Medium geht man beispielsweise so vor, daß man die Komponente (II) in wäßrigem Medium vorlegt, auf die gewünschte Polymerisationstemperatur erhitzt und die Monomeren (I) kontinuierlich oder absatzweise dem polymerisierenden Reaktionsgemisch zufügt. Der pH-Wert des Ansatzes kann sich im Bereich zwischen 0,5 und 14 bewegen. Bei einem niedrigen pH-Wert werden die Säuregruppen enthaltenden Monomeren z.B. (Meth)Acrylsäure der Komponente (I) in der Säureform eingesetzt, während diese Monomeren bei einem hohen pH-Wert in der Salzform vorliegen.

Wenig gefärbte und besonders gut wirksame Polymerisate werden dann erhalten, wenn man die Polymerisation im pH-Bereich von 4 bis 8 durchführt. Dies kann so erfolgen, daß man die Säuregruppen vor der Polymerisation auf den gewünschten pH-Wert einstellt, oder daß man während der Polymerisation durch stetige Zugabe von Neutralisationsmittel den pH-Wert konstant hält. Als Neutralisationsmittel sind besonders geeignet Natronlauge, Kalilauge, Ammoniak, Ethanolamin, Diethanolamin oder Triethanolamin. Bei der Lösungspolymerisation in Wasser sind wasserlösliche Initiatoren bzw. Initiatorsysteme besonders bevorzugt. Bei einer besonders günstigen Herstellungsweise legt man im Reaktor Wasser und die Komponente (II) gegebenenfalls in teil- oder vollneutralisierter Form vor und dosiert bei der gewählten Polymerisationstemperatur innerhalb von 0,5 bis 10 Stunden absatzweise oder kontinuierlich die Monomeren (I) zu.

Bei einer bevorzugten Herstellungsart wird in einem Eintopfverfahren die Pfropfgrundlage (II) als Lösungs- oder Füllungspolymerisat in einem aromatischen Kohlenwasserstoff hergestellt und dann sofort mindestens eine Gruppe der Monomeren der Komponente (I) auf einmal oder über einen längeren Zeitraum verteilt zugesetzt und polymerisiert.

Sobald die Temperatur bei der Polymerisation oberhalb der Siedepunkte des inerten Verdünnungs- oder Lösungsmittels oder der Monomeren liegt, wird die Polymerisation unter Druck durchgeführt. Die Konzentration der Komponenten (I) und (II) beträgt bei der Polymerisation in Gegenwart von inerten Lösungs- oder inerten Verdünnungsmitteln in der Regel 10 bis 80, vorzugsweise 20 bis 70 Gew.-%. Die Herstellung der Pfropfpolymerisate kann in den üblichen Polymerisationsvorrichtungen erfolgen. Hierzu verwendet man beispielsweise Rührkessel, die mit einem Anker-, Blatt-, Impeller- oder Mehrstufenimpulsgegenstromrührer ausgestattet sind.

Man erhält nach den beschriebenen Verfahren wasserlösliche oder wasserdispergierbare Pfropfpolymerisate mit K-Werten nach H. Fikentscher von 6 bis 150 (gemessen an 1 gew.-%igen wäßrigen Lösungen der Na-Salze der Polymerisat bei pH 7 und 25°C). Die bevorzugten K-Werte für die erfindungsgemäße Anwendung liegen im Bereich von 6 bis 100, insbesondere 6 bis 50.

Die Prozentangaben in den Beispielen sind Gewichtsprozent, falls nicht anders bezeichnet. Die Teile sind Gewichtsteile. Die Molmassen der Polymerisate wurden aus den Natriumsalzen nach der Methode der Gelpermeationschromatographie (GPC) mit wäßrigen Elutionsmitteln bestimmt. Die Eichung der Trennsäulen erfolgt mit breitverteilten Natriumpolyacrylatmischungen, deren integrale Molgewichtsverteilungskurve durch GPC-Laserlichtstreukopplung nach dem Eichprinzip von M.J.R. Cantow u.a. bestimmt wurde, (vgl. J. Polym. Sci, A-1,5 (1967) 1391-1394, allerdings ohne die dort vorgeschlagene Konzentrationskorrektur, vgl. R. Brüssau, W. Goetz, W. Mächtle und J. Stölting - Characterization of Polyacrylate Samples in Tenside Surfactants Detergents, Heft 6/91, Seiten 396 bis 406, Jahrgang 28).

Die oben beschriebenen Pfropfpolymerisate werden als Zusatz zu phosphatfreien oder phosphatreduzierten Textilwaschmitteln verwendet. Sie bewirken dabei gegenüber den Einzelkomponenten eine in unerwarteter Weise verbesserte Inkrustationsinhibierung sowie eine gleichzeitige Verbesserung der Primärwaschwirkung.

Unter phosphatreduzierten Textilwaschmitteln sollen solche Formulierungen verstanden werden, die bis zu 25 Gew.-% an Phosphat, berechnet als Pentanatriumtriphosphat, enthalten. Die Waschmittelformulierungen enthalten üblicherweise Tenside in Mengen von 1 bis 50 Gew.-%, in einigen Fällen sogar noch höhere Mengen an Tensid und gegebenenfalls Builder. Diese Angaben gelten sowohl für flüssige als auch für pulverförmige Waschmittelformulierungen. Beispiele für die Zusammensetzung von Waschmittelformulierungen, die in Europa, in den U.S.A. und in Japan gebräuchlich sind, findet man beispielsweise in Chemical und Engn. News, Band 67, 35 (1989) tabellarisch dargestellt sowie in Ullmanns Encyklopädie der technischen Chemie, Verlage Chemie, Weinheim 1983, 4. Auflage, Seiten 63 bis 160. Weiterhin können solche Waschmittelformulierungen als Builder auch Alkalisilikate in amorpher Form oder als Schichtsilikate enthalten.

Die erfindungsgemäßen Pfropfpolymerisate werden mit besonderem Vorteil in phosphatfreien Kompaktwaschmitteln eingesetzt. Solche Waschmittel enthalten beispielsweise
- 5 bis 25, vorzugsweise 10 bis 20 Gew.-% anionische und/oder nichtionische Tenside,
- 20 bis 45 Gew.-% Zeolith A oder Schichtsilikate, die entweder amorph oder kristallin sein können, als Builder,
- 10 bis 20 Gew.-% Soda und
- 3 bis 10 Gew.-% der erfindungsgemäßen Pfropfpolymeren.

Die oben beschriebenen Formulierungen können außerdem weitere übliche Zusätze enthalten, z.B. Polyvinylpyrrolidon als Farbübertragungsinhibitor, Carboxymethylcellulose und/oder Bleichmittel wie Perborate.

Die erfindungsgemäßen Pfropfpolymeren können auch zusammen mit bereits bekannten Polymeren wie z.B. Poly(meth)acrylsäuren, Copolymeren aus Acrylsäure und Maleinsäure, Pfropfpolymerisaten von monoethylenisch ungesättigten Carbonsäuren auf Mono-, Di- und Polysacchariden und/oder Polyasparaginsäuren Verwendung finden. Die bekannten Inkrustationsinhibitoren können in beliebigen Verhältnissen miteinander kombiniert werden. Einige solcher Mischungen zeigen synergistische Effekte, z.B. Mischungen aus den erfindungsgemäßen Pfropfpolymeren und Polyasparaginsäure oder Copolymerisaten aus Acrylsäure und Maleinsäure.

Die Pfropfpolymeren aus den Komponenten (I) und (II) sind in einer Menge von 0,2 bis 20, vorzugsweise 0,5 bis 15 Gew.-% in den Waschmittelformulierungen enthalten.

Wasserenthärter, die dem Waschprozeß zusätzlich zu den Waschmitteln zugesetzt werden können, enthalten üblicherweise Natriumtripolyphosphat, Zeolith, Nitrilotriacetat, gegebenenfalls Tenside und 2 bis 40 % der erfindungsgemäßen Polymerisatmischungen. Eine phosphatfreie Wasserenthärterformulierung enthält beispielsweise 70 % Zeolith A, 15 % Soda, 5 % Citrat und 10 % der Pfropfpolymeren.

Die erfindungsgemäßen Mischungen werden außerdem als Dispergiermittel und Belagsverhinderer in Reinigern für harte Oberflächen verwendet. Gegenüber den Standardpolymeren in einer Reinigerformulierung entfalten die Pfropfpolymeren auch hier überraschenderweise eine wesentlich bessere Belagsinhibierung als die üblicherweise eingesetzten Polyacrylsäuren bzw. deren Salze.

Unter Reinigern für harte Oberflächen sollen beispielsweise Reiniger für die Metall-, Kunststoff-, Glas- und Keramikreinigung, Fußbodenreiniger, Sanitärreiniger, Allzweckreiniger im Haushalt und in gewerblichen Anwendungen, technische Reiniger (für den Einsatz in Autowaschanlagen oder Hochdruckreinigern), Kaltreiniger, Geschirreiniger, Klarspüler, Desinfektionsreiniger, Reiniger für die Nahrungsmittel- und Getränkeindustrie, insbesondere als Flaschenreiniger, als CIP-Reiniger (Cleaning-in-Place) in Molkereien, Brauereien und sonstigen Betrieben von Nahrungsmittelherstellern verstanden werden. Reiniger, die die erfindungsgemäßen Polymerisatmischungen enthalten, eignen sich besonders zum Reinigen harter Oberflächen wie Glas, Kunststoff und Metall. Die Reiniger können alkalisch, sauer oder neutral eingestellt sein. Sie enthalten üblicherweise Tenside in Mengen von etwa 0,2 bis 50 Gew.-%. Hierbei kann es sich um anionische, nicht-ionische oder kationische Tenside sowie um Mischungen von Tensiden handeln, die miteinander verträglich sind, z.B. Mischungen aus anionischen und nicht-ionischen oder aus kationische und nicht-ionischen Tensiden. Alkalische Reiniger können enthalten Soda, Pottasche, Natriumhydrogencarbonat, Kaliumhydrogencarbonat, Natriumsesquicarbonat, Kaliumsesquicarbonat, Natriumhydroxid, Kaliumhydroxid, Aminbasen wie Monoethanolamin, Diethanolamin, Triethanolamin, Ammoniak oder Silikat in Mengen bis zu 60 Gew.-%, in einigen Fällen sogar bis zu 80 Gew.-%. Die Reiniger können außerdem Citrate, Glukonate oder Tartrate in Mengen bis zu 80 Gew.-% enthalten. Sie können in fester oder in flüssiger Form vorliegen. Die erfindungsgemäßen Pfropfpolymeren aus den Komponenten (I) und (II) sind in den Reinigern in Mengen von 0,2 bis 20, vorzugsweise 0,5 bis 15 Gew.-% enthalten.

Die erfindungsgemäßen Pfropfpolymerisate können auch als Wasserbehandlungsmittel zur Verminderung der Kesselsteinabscheidung und der Wasserhärteausscheidung in wasserführenden Systemen verwendet werden. Möglich ist die Kombination der erfindungsgemäßen Polymeren mit anderen Dispergiermitteln, wie Phosphonaten, Phosphonoalkancarbonsäuren etc.

Die Wirkungsweise der Pfropfpolymerisate als sog. Belagsverhinderer (Scale-Inhibitoren) für die Wasserbehandlung besteht darin, die Bildung von Kristallen der Härtebildnersalze, wie Calciumcarbonat, Magnesiumoxid, Magnesiumcarbonat, Calcium-, Barium- oder Strontiumsulfat, Calciumphosphat (Apatit) und ähnliche im unterstöchiometrischen Dosierungsbereich zu verhindern oder die Bildung dieser Niederschläge so zu beeinflussen, daß keine harten und steinartigen Beläge entstehen, sondern leicht ausschwemmbare, im Wasser fein verteilte Ausscheidungen gebildet werden. Auf diese Weise werden die Oberflächen von z.B. Wärmeaustauschern, Rohren oder Pumpenbauteilen von Belägen freigehalten und deren Korrosionsneigung vermindert. Insbesondere wird die Gefahr von Lochfraßkorrosion unter diesen Belägen verringert. Ferner wird das Aufwachsen von Mikroorganismen auf diesen Metalloberflächen erschwert. Durch den Einfluß der Belagsverhinderer kann die Lebensdauer von solchen Anlagen erhöht und Stillstandzeiten zur Reinigung von Anlagenteilen erheblich reduziert werden. Die hierzu benötigten Mengen von Belagsverhinderer betragen 0,1 bis 100, vorzugsweise 0,5 bis 25 ppm, bezogen auf die jeweilige Wassermenge. Bei den wasserführenden Systemen handelt es sich z.B. um offene oder geschlossene Kühlkreisläufe, beispielsweise von Kraftwerken oder chemischen Anlagen, wie Reaktoren, Destillationsapparaturen und ähnlichen Bauteilen, bei denen Wärme abgeführt werden muß. Der Einsatz dieser Belagsverhinderer kann auch in Boilerwässern und Dampferzeugern, vorzugsweise im Bereich von Wassertemperaturen unterhalb 150°C erfolgen. Eine bevorzugte Anwendung der erfindungsgemäß zu verwendenden Belagsverhinderer ist ferner die Entsalzung von Meer- und Brackwasser durch Destillation oder Membranverfahren, wie z.B. die umgekehrte Osmose oder Elektrodialyse. So wird z.B. beim sog. MSF-Destillationsverfahren (Multistage Flash Evaporation) zur Meerwasserentsalzung eingedicktes Meerwasser mit erhöhter Temperatur im Umlauf gefahren. Die Belagsyerhinderer unterbinden dabei wirksam die Ausscheidung von Härtebildnern, wie z.B. Brucit und deren Anbacken an Anlagebauteile.

Bei Membranverfahren kann die Schädigung der Membranen durch auskristallisierende Härtebildner wirksam verhindert werden. Auf diese-Weise ermöglichen diese Belagsverhinderer höhere Eindickungsfaktoren, verbesserte Ausbeute an Reinwasser und längere Lebensdauer der Membranen. Eine weitere Anwendung der Belagsverhinderer ist z.B. beim Eindampfen von Zuckersäften aus Rohr- oder Rübenzucker gegeben. Im Gegensatz zu oben beschriebenen Anwendungen werden hier dem Zuckerdünnsaft zur Reinigung z.B. Calcium-hydroxid, Kohlendioxid, Schwefeldioxid oder gegebenenfalls Phosphorsäure zugesetzt. Nach Filtration im Zuckersaft verbleibende schwerlösliche Calciumsalze, wie z.B. Calciumcarbonat, -sulfat oder -phosphat, fallen dann während des Eindampfprozesses aus und können als steinharte Beläge auf Wärmetauscheroberflächen auftreten. Dies gilt ebenso auch für Zuckerbegleitstoffe, wie Kieselsäure oder Calciumsalze organischer Säuren, wie z.B. Oxalsäure.

Ähnliches gilt für Verfahren, die sich an die Zuckergewinnung anschließen, so z.B. die Alkoholgewinnung aus Rückständen der Zuckerproduktion.

Die erfindungsgemäß als Belagsverhinderer einsetzbaren Pfropfpolymerisate sind in der Lage, die obengenannten Belagsbildungen weitgehend zu unterbinden, so daß Stillstandszeiten der Anlagen zur Reinigung, z.B. durch Auskochen, entscheidend verringert werden können. Ein wesentlicher Gesichtspunkt hierbei ist ferner die beträchtliche Energieeinsparung durch Vermeidung der genannten wärmeisolierenden Beläge.

Die in den beschriebenen Anwendungen nötigen Mengen des Belagsverhinderers sind unterschiedlich, betragen jedoch zwischen 0,1 und 100 ppm, bezogen auf eingesetztes Kühlwasser, Boilerwasser, Prozeßwasser oder z.B. Zuckersaft.

Die erfindungsgemäß zu verwendenden Produkte weisen eine bessere Dispergierung gegenüber Härtebildnersalzen, wie Ca-Carbonat, Ca-Sulfat und Ca-Phosphat auf und sind ferner besser verträglich mit Ca-Ionen als Homopolymerisate der Acrylsäure.

Die K-Werte der Copolymerisate wurden nach H. Fikentscher, Cellulose-Chemie, Band 13, 58 bis 64 und 71 bis 74 (1932) in wäßriger Lösung bei einem pH-Wert von 7, einer Temperatur von 25°C und einer Polymerkonzentration des Kaliumsalzes des Copolymerisats von 1 Gew.-% bestimmt, sofern nichts anderes angegeben ist. Die Angaben in Prozent beziehen sich auf das Gewicht der Stoffe.

### Beispiele

### Beispiel 1

In einem Reaktor mit Kühler und Zulaufvorrichtungen werden 400 g Maleinsäureanhydrid und 500 g Ethylbenzol unter Einleitung eines schwachen Stickstoffstromes (10 l/h) auf 100°C erhitzt. Innerhalb von 7 Stunden dosiert man bei 100°C gleichmäßig eine Lösung von 30 g tert.-Butylperethylhexanoat in 60 g Ethylbenzol zu. Nach 6 Stunden sind 99 % des Maleinsäureanhydrids polymerisiert. Nun wird innerhalb von 1 Stunde eine Lösung von 80 g Acrylsäure in 40 g Ethylbenzol gleichmäßig zudosiert. Nach Zugabe der Monomeren und des Initiators wird das Reaktionsgemisch noch 2 Stunden bei 100°C nacherhitzt. Anschließend werden 300 g destilliertes Wasser zugesetzt und das Ethylbenzol durch Einleiten von Wasserdampf abdestilliert. Es wird solange Dampf eingeleitet bis eine Innentemperatur von 100°C im Reaktor erreicht ist. Anschließend wird mit 550 g 50 %iger wäßriger Kalilauge neutralisiert. Der Feststoffgehalt der erhaltenen gelben und klaren Polymerisatlösung beträgt 45,5 % und der pH-Wert 4,8. Der K-Wert des Pfropfpolymeren beträgt 7,5 (gemessen an der auf pH 7 mit Kalilauge eingestellten Polymerisatlösung 5 %ig in Wasser bei 25°C). Die Molmasse M_{W} beträgt 1.210.

### Beispiel 2

Beispiel 1 wird mit den Ausnahmen wiederholt, daß man ein Lösung von 120 g Acrylsäure in 40 g Ethylbenzol auf Polymaleinsäureanhydrid aufpfropft. Die so erhältliche gelbe und klare Polymerisatlösung hat einen Feststoffgehalt von 44,8 % und einen pH-Wert von 4,5. Die Molmasse M_{W} des Pfropfpolymerisats beträgt 1.770.

### Beispiel 3

Beispiel 1 wird mit den Ausnahmen wiederholt, daß man auf das zunächst als Pfropfgrundlage hergestellte Polymaleinsäureanhydrid eine Lösung von 160 g Acrylsäure in 40 g Ethylbenzol einsetzt. Das Reaktionsgemisch in Abweichung von Beispiel 1 mit 570 g 50 %iger wäßriger Kalilauge neutralisiert. Die gelbe, klare Lösung des Pfropfpolymerisats hatte einen Feststoffgehalt von 45,5 % und einen pH-Wert von 4,5. Die Molmasse M_{W} beträgt 2.610.

### Beispiel 4

Beispiel 1 wird mit der Ausnahme wiederholt, daß man anstelle von Acrylsäure jetzt 80 g Methacrylsäure auf Polymaleinsäureanhydrid aufpfropft. Zur Neutralisation verwendete man, abweichend von Beispiel 1, 530 g 50 %ige wäßrige Kalilauge. Die gelbe, klare wäßrige Lösung des Salzes des Pfropfpolymerisats hatte einen Feststoffgehalt von 45 % und einen pH-Wert von 4,5. Die Molmasse M_{W} beträgt 1.570.

### Beispiel 5

Beispiel 1 wird mit der einzigen Ausnahme wiederholt, daß man auf das als Pfropfgrundlage dienende Polymaleinsäureanhydrid 80 g Hydroxypropylacrylat aufpfropft. Nach dem Abdestillieren des Ethylbenzols wurde das Reaktionsgemisch durch Zugabe von 450 g 50 %iger wäßriger Kalilauge neutralisiert. Man erhält eine gelbe, klare wäßrige Lösung eines teilweise neutralisierten Pfropfpolymerisats mit einem Feststoffgehalt von 44,4 % und einen pH-Wert von 4,5. Die Molmasse des Pfropfpolymerisats beträgt 1.150.

### Beispiel 6

Beispiel 1 wird mit der Ausnahme wiederholt, daß man anstelle von Acrylsäure 80 g Styrol auf Polymaleinsäureanhydrid pfropft. Nach dem Entfernen des Ethylbenzols wird die wäßrige Lösung durch Zugabe von 480 g 50 %iger wäßriger Kalilauge neutralisiert. Die milchige, gelbe Dispersion hat einen Feststoffgehalt von 45,2 % und einen pH-Wert von 4,5.

### Beispiel 7

Beispiel 1 wird mit der Ausnahme wiederholt, daß man anstelle von Acrylsäure 80 g n-Butylacrylat auf das als Pfropfgrundlage dienende Polymaleinsäureanhydrid aufpfropft. Nach dem Abdestillieren des Ethylbenzols wird das Reaktionsgemisch durch Zugabe von 480 g 50 %iger wäßriger Kalilauge neutralisiert. Die gelbliche, leichttrübe Lösung hat einen Feststoffgehalt von 45,2 % und einen pH-Wert von 4,5. Der K-Wert des auf einen pH-Wert von 7,0 eingestellten Pfropfpolymerisats beträgt bei einer Polymerkonzentration von 5 % in Wasser 6,6.

Die oben beschriebenen Pfropfpolymerisate wurden auf ihre Eignung als Waschmitteladditive getestet. Um den Einfluß der Pfropfpolymerisate auf die Primär- und Sekundärwaschwirkung zu testen, verwendete man folgende Waschmittelformulierung:
8,0 % Dodecylbenzolsulfonat
7,0 % C₁₃- bis C₁₅-Oxoalkohol + 7 Ethylenoxid
2,0 % Seife
36,0 % Zeolith A
12,0 % Soda
5,0 % Polymer (100 %ig) gemäß den Angaben in Tabelle 1
1,0 % CMC (Carboxymethylcellulose)
22,0 % Natriumperborat - Monohydrat
3,5 % Bleichaktivator (Ethylendiamintetraessigsäure Na-Salz)
0,2 % handelsüblicher optischer Aufheller
3,3 % Natriumsulfat

### Waschbedingungen:

| | Primärwaschwirkung | Sekundärwaschwirkung Inkrustierung |
|---|---|---|
| Waschgerät | Launder-O-meter | Launder-O-meter |
| Wasserhärte | 3 mmol Ca/Mg/l =16,8°d | 4 mmol Ca/Mg/l =22,4°d |
| Verhältnis Ca : Mg | 4 : 1 | 4 : 1 |
| Waschtemperatur | 60°C | 60°C |
| Waschzyklen | 1 | 15 |
| Waschmitteldosierung | 4,5 g/l | 4,5 g/l |
| Flottenverhältnis | 1 : 12,5 | 1 : 12,5 |
| Gewebe | * WFK 10D | Baumwolle |
| | WFK 20 D } je 5 g | |
| | EMPA 101 | |
| | EMPA 104 } je 5 g | |
| | Baumwolle (10 g) | |
| | | Veraschen des Gewebes im Muffelofen bei 700°C |

| | | |
|---|---|---|
| * WFK-Gewebe 10D und 20D (Standardanschmutzung mit Pigment/Hautfett) EMPA-Gewebe 101 und 104 (Standardanschmutzung mit Ruß/Olivenöl) | | |

Weißgrad = Remission Summe aus 4 Geweben
- WFK 10D: Baumwolle
- WFK 20D: Polyester/Baumwolle
- EMPA 101: Baumwolle
- EMPA 104: Polyester/Baumwolle
Die bei den Prüfungen jeweils verwendeten Polymeren bzw. Polymermischungen und die dabei erhaltenen Ergebnisse sind in Tabelle 1 angegeben.

**Tabelle 1**

| Primär- und Sekundärwaschwirkung von Pfropfpolymeren in der oben beschriebenen Waschmittelformulierung | | | | |
|---|---|---|---|---|
| | Vergleichsbeispiel | Zusatz an Polymer erhalten nach Beispiel | Weißgrad [Remission] | Asche (Gew.-%) |
| | 1 | ohne Zusatz | 164,3 | 3,46 |
| | 2 | handelsübliches Polymer aus 70 Gew.-% Acrylsäure und 30 Gew.-% Maleinsäure Molmasse 70.000 | 179,6 | 2,73 |

| Beispiel | | | | |
|---|---|---|---|---|
| 8 | - | 1 | 169,9 | 0,73 |
| 9 | - | 2 | 173,8 | 0,62 |
| 10 | - | 3 | 173,5 | 0,72 |
| 11 | - | 4 | 172,1 | 0,66 |
| 12 | - | 5 | 177,5 | 0,66 |
| 13 | - | 6 | 170,3 | 0,81 |
| 14 | - | 7 | 168,2 | 0,87 |

Wie aus der Tabelle 1 ersichtlich ist, sind die erfindungsgemäßen Pfropfpolymeren deutlich wirksamer als ein handelsübliches Polymer aus 70 Gew.-% Acrylsäure und 30 Gew.-% Maleinsäure vom Molgewicht 70.000.

### Beispiel 15

Anwendungstechnische Prüfung des gemäß Beispiel 5 erhaltenen Pfropfpolymers als Additiv für Geschirrspülmittelformulierungen

Die Geschirrspülmittelformulierung hatte folgende Zusammensetzung:
20 % Natriumcitrat. 2 H₂O
24 % Natriumdisilikat
40 % Natriumcarbonat
7 % Natriumperborat. 1 H₂O
2 % Ethylendiamintetraessigsäure Na-Salz
2 % handelsübliches Netzmittel
5 % Polymer (100 %ig).

Die Prüfung wird in der Weise durchgeführt, daß man 4 g der oben beschriebenen Geschirrspülmittelformulierung pro Liter Trinkwasser van 10° dH verwendet. In einer Haushaltsgeschirrspülmaschine des Typs Miele G 590 SC werden 15 Waschzyklen mit einem Geschirr durchgeführt, das aus schwarzen Kunststofftellern, schwarzen Porzellantellern, Messern und Trinkgläsern bestand. Nach den 15 Waschzyklen wurde das Geschirr visuell beurteilt. Die Note 0 bedeutet, daß auch nach 15 Zyklen kein Belag auf dem Geschirr zu sehen ist, die Note 9 bedeutet dagegen einen sehr starken Belag. Die Noten 1 bis 8 sind zwischen den Noten 0 und 9 liegende Abstufungen. Die Spülergebnisse sind in Tabelle 2 angegeben. Wie daraus ersichtlich ist, ist das erfindungsgemäß verwendete Pfropfpolymer deutlich wirksamer als das üblicherweise verwendete Natriumpolyacrylat.

**Tabelle 2**

| Vergleichsbeispiel | Zusatz an Polymerisat | Beurteilungsnote bei | | | |
|---|---|---|---|---|---|
| | | Kunststoffteller | Porzellanteller | Messer | Trinkgläser |
| 3 | ohne | 9 | 5 | 6 | 7 |
| 4 | Natriumpolyacrylat M_{W}: ≈4000 | 4-5 | 2-3 | 2 | 4 |
| Beispiel 15 | hergestellt nach Beispiel 5 (erfindungsgemäß) | 0-1 | 2 | 1-2 | 2-3 |

### Beispiel 16

Anwendungstechnische Prüfung der Pfropfpolymerisate auf die Wirksamkeit als Scaleinhibitor (Belagsverhinderer) für die Wasserbehandlung
Um die anwendungstechnischen Eigenschaften der Pfropfpolymerisate zu ermitteln, wird ihr Verhalten bei der Meerwasserentsalzung beurteilt. Hierfür wurden folgende Prüfmethoden angewendet:
Scaleinhibierung (Belagsverhinderung) bei der Meerwasserentsalzung
In diesem Test werden die Pfropfpolymerisate als Inhibitor bei der Bildung von Calcium- und Magnesiumhydroxiden und -carbonaten aus synthetischer Meerwasserlösung untersucht. Bei der Meerwasserentsalzung bilden besonders Calciumcarbonat und Magnesium-hydroxid auf den Wärmetauscheroberflächen festhaftende und störende-Beläge. Auch die Bildung von Bariumsulfat ist hierbei ein ernst zu nehmendes Problem. Die Testlösung besteht aus einer wäßrigen Salzlösung, die
70°d Mg²⁺
14°d Ca²⁺
70°d CO₃²⁻
enthält.

Die synthetische Meerwasserlösung wird dann mit jeweils 25 ppm der in den Beispielen 1 bis 7 beschriebenen Pfropfpolymerisate versetzt und für 3 Stunden in einer dynamischen Umlaufapparatur im Kreis gepumpt. Nach einer Testdauer von 3 Stunden werden Proben entnommen, die titrimetrisch auf den Gehalt an Wasserhärte analysiert werden. Durch die Abnahme an Wasserhärte im Verlauf des Versuches kann man auf die sich bildenden Beläge im Wärmeaustauscher zurückrechnen. Je geringer der Härtegrad in der entnommenen Wasserprobe ist, um so mehr Belag hat sich auf den Wärmeaustauscherrohren abgesetzt. Die ermittelten Wasserhärten sind in Tabelle 3 aufgelistet. Ein hoher Härtegrad nach 3 Stunden Testzeit läßt auf eine gute Scaleinhibierung (Belagsverhinderung) schließen.

Die Prüfergebnisse der erfindungsgemäßen Pfropfpolymeren im Vergleich zu einem Marktprodukt sind in der nachfolgenden Tabelle 3 angegeben. Das Marktprodukt ist eine Polymaleinsäure der Molmasse 1000.

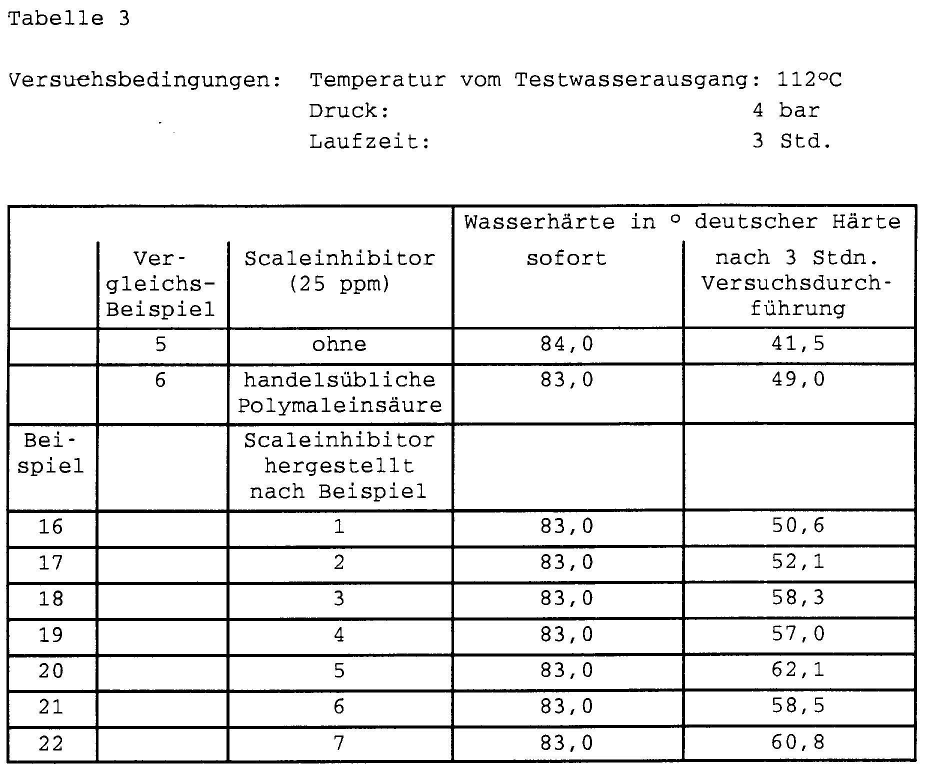

Wie aus der Tabelle 3 ersichtlich ist, sind die erfindungsgemäßen Pfropfpolymeren deutlich wirksamer als ein etabliertes Handelsprodukt.

## Patentansprüche

1. Wasserlösliche oder wasserdispergierbare Pfropfpolymerisate, dadurch gekennzeichnet, daß sie erhältlich sind durch radikalisch initiierte Pfropfpolymerisation von
(I) mindestens eines monoethylenisch ungesättigten Monomeren auf
(II) Polymerisaten einer Molmasse von 200 bis 5000 von monoethylenisch ungesättigten Dicarbonsäuren oder ihren Anhydriden
wobei man auf 100 Gewichtsteile der Pfropfgrundlage (II) 5 bis 2000 Gewichtsteile (I) einsetzt.

2. Wasserlösliche oder wasserdispergierbare Pfropfpolymerisate nach Anspruch 1, dadurch gekennzeichnet, daß man als Monomere (I) monoethylenisch ungesättigte C₃- bis C₁₀-Carbonsäuren, Ester dieser Carbonsäuren mit C₁- bis C₁₈-Alkoholen, Hydroxialkylacrylaten, Hydroxialkylmethyacrylaten, Vinylestern von C₁-bis C₁₈-Carbonsäuren, Styrol, Isobuten, Diisobuten, Methylstyrol und deren Gemische einsetzt.

3. Wasserlösliche oder wasserdispergierbare Pfropfpolymerisate nach Anspruch 1 oder 2, dadurch gekennzeichnet, daß man als Pfropfgrundlage (II) Polymerisate aus
(a) 60 bis 100 Gew.-% monoethylenisch ungesättigten C₄-bis C₈- Dicarbonsäuren in Form der freien Säuren oder in mit Alkalimetall-, Ammonium- oder Erdalkalimetallbasen teilweise oder vollständig neutralisierter Form oder Anhydriden von C₄- bis C₈-Dicarbonsäuren,
(b) 0 bis 38 Gew.-% anderen monoethylenisch ungesättigten Monomeren und/oder
(c) 0 bis 2 Gew.-% copolymerisierbaren Monomeren, die mindestens zwei nicht konjugierte, ethylenisch ungesättigte Doppelbindungen im Molekül enthalten,
einsetzt.

4. Wasserlösliche Pfropfpolymerisate nach einem der Ansprüche 1 bis 3, dadurch gekennzeichnet, daß man als Pfropfgrundlage (II) Maleinsäureanhydrideinheiten enthaltende Polymerisate einer Molmassse von 200 bis 5000 einsetzt.

5. Verfahren zur Herstellung von wasserlöslichen oder wasserdispergierbaren Pfropfpolymerisaten nach Anspruch 1, dadurch gekennzeichnet, daß man
(I) mindestens ein monoethylenisch ungesättigtes Monomer in Gegenwart von
(II) Polymerisaten einer Molmasse von 200 bis 5000 von monoethylenisch ungesättigten Dicarbonsäuren oder ihren Anhydriden
radikalisch polymerisiert, wobei man auf 100 Gewichtsteile der Pfropfgrundlage (II) 5 bis 2000 Gewichtsteile (I) einsetzt.

6. Verwendung der wasserlöslichen oder wasserdispergierbaren Pfropfpolymerisate nach einem der Ansprüche 1 bis 5 als Zusatz zu phosphatfreien oder phosphatreduzierten Textilwaschmitteln, als Dispergiermittel und Belagsverhinderer in Reinigern für harte Oberflächen und als Wasserbehandlungsmittel zur Verminderung der Kesselsteinabscheidung und der Wasserhärteausscheidung in wasserführenden Systemen.
